## Europäisches Patentamt
## European Patent Office
## Office européen des brevets

(19)

(11) Numéro de publication: **0 250 303 B1**

(12) **FASCICULE DE BREVET EUROPEEN**

(45) Date de publication du fascicule du brevet: 22.11.90

(51) Int. Cl.⁵: **B60Q 1/14, H01H 3/50**

(21) Numéro de dépôt: **87401326.1**

(22) Date de dépôt: **12.06.87**

(54) Commutateur en particulier pour la commande des feux d'un véhicule automobile.

(30) Priorité: **13.06.86 FR 8608635**

(43) Date de publication de la demande: **23.12.87 Bulletin 87/52**

(45) Mention de la délivrance du brevet: **22.11.90 Bulletin 90/47**

(84) Etats contractants désignés: **DE ES GB IT**

(56) Documents cités:
**DE-A- 2 849 686**
**DE-C- 720 718**
**FR-A- 2 342 184**

(73) Titulaire: **JAEGER, 2, rue Baudin, F-92303 Levallois-Perret(FR)**

(72) Inventeur: **Gauthier, Christian, 47, rue Descartes, F-75005 Paris(FR)**

(74) Mandataire: **Schrimpf, Robert et al, Cabinet Regimbeau 26, Avenue Kléber, F-75116 Paris(FR)**

## Description

La présente invention concerne un commutateur électrique, en particulier pour la commande des feux d'un véhicule automobile.

La présente invention concerne plus précisément un commutateur du type comprenant :

- une platine support portant des contacts électriques,

- un équipage mobile porté à pivotement sur la platine support entre une position de repos et au moins une position de travail, et équipé d'au moins un plot de contact apte à coopérer avec les contacts électriques portés par la platine,

- des moyens sollicitant élastiquement l'équipage mobile vers sa position de repos,

- un élément de verrouillage réalisé au moins partiellement en matériau ferromagnétique, sollicité par ressort, intercalé entre la platine et l'équipage mobile pour verrouiller l'équipage mobile en position choisie, et

- une bobine adaptée, par contrôle de son alimentation, pour déplacer l'élement de verrouillage à l'encontre de la sollicitation exercée par le ressort qui lui est associé pour déverrouiller l'équipage mobile et autoriser son retour vers la position de repos.

Un tel commutateur est par exemple décrit dans le document DE-C 720 718.

Plus précisément selon le document DE-C 720 718 l'élément de verrouillage est formé d'une lamelle souple s'étendant transversalement à l'axe de pivotement de l'équipage mobile.

La Demanderesse a constaté qu'un tel commutateur ne donne pas entière satisfaction du fait que ladite lamelle est susceptible de déformation, notamment pas flambage, et que l'équipage mobile n'est pas indexé avec précision dans son déplacement.

Un autre dispositif de commutation électrique comprenant un équipage mobile associé à un élément de verrouillage commandé par une bobine est décrit dans le document DE-A 2 849 686.

La présente invention a pour but de proposer un commutateur électrique conçu pour commander les indicateurs de changement de direction d'un véhicule automobile, qui comprend un équipage mobile de commande, indexé avec précision dans son déplacement.

Un but principal de la présente invention est de proposer un tel commutateur électrique pour la commande des indicateurs de changement de direction d'un véhicule automobile qui possède deux positions instables généralement dénommées «position autoroute» et deux positions stables, susceptibles d'être déverrouillées à distance.

Un autre but de la présente invention est de proposer un commutateur électrique permettant de commander à l'aide d'une manette unique les indicateurs de changement de direction d'un véhicule automobile et une commutation code/phare.

Un autre but de la présente invention est de proposer un commutateur életrique compact, robuste, fiable et économique.

Ces différents buts sont atteints dans le cadre de la présente invention, grâce à un commutateur du type précédemment évoqué, comme de part le document DE-C 720 718, caractérisé par le fait que l'élément de verrouillage est formé d'un poussoir ou noyau plongeur engagé dans la bobine et susceptible de translation dans un plan passant par l'axe de pivotement de l'équipage mobile, le poussoir étant porté par la platine et sollicité vers une zone de l'équipage mobile équipée de crantages aptes à assurer en coopération avec la tête du poussoir, le verrouillage et l'indexage de l'équipage mobile en position de travail.

Selon une caractéristique avantageuse de l'invention les moyens sollicitant élastiquement l'équipage mobile vers sa position de repos comprennent un plan sollicité par ressort qui porte un galet roulant sur une came incurvée.

Selon une autre caractéristique de l'invention, l'équipage mobile est porté à pivotement sur la platine entre une position de repos et deux positions de travail symétrique situées respectivement de part et d'autre de la position de repos.

Selon une autre caractéristique préférentielle de la présente invention, l'équipage mobile est porté à pivotement sur la platine autour d'un axe principal et l'équipage mobile porte une manette à pivotement autour d'un axe secondaire perpendiculaire à l'axe principal.

Les déplacements de la manette à pivotement autour de l'axe secondaire permettent avantageusement de commander une commutation code/phare des feux d'un véhicule automobile. De préférence, selon l'invention, cette commutation code/phare est assurée par un coulisseau déplacé à translation par la manette et une bascule associée.

D'autres caractéristiques, buts et avantages de la présente invention apparaîtront à la lecture de la description détaillée qui va suivre et en regard des dessins annexés , donnés à titre d'exemple non limitatif et sur lesquels :

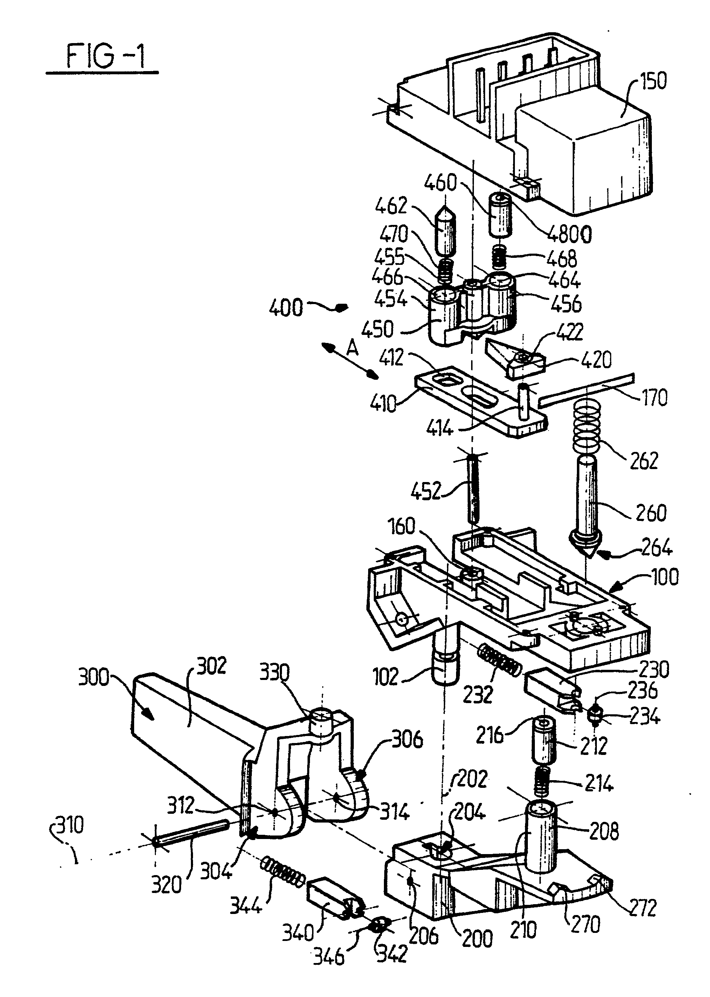

- la figure 1 représente une vue schématique éclatée en perspective d'un commutateur conforme à la présente invention,

- la figure 2 représente une vue schématique du commutateur conforme à la présente invention selon un plan de coupe référencé II-II sur la figure 3,

- la figure 3 représente une vue de ce commutateur selon un plan de coupe transversal référencé III-III sur la figure 2, et

- la figure 4 représente une autre vue en coupe de ce commutateur selon un plan de coupe transversal référencé IV-IV sur la figure 2.

Pour l'essentiel, le commutateur conforme à la présente invention représenté sur les figures annexées comprend une platine support 100, un équipage mobile 200 adapté pour commander les indicateurs de changement de direction d'un véhicule automobile et une manette 300 adaptée pour commander un ensemble 400 de commutation code/phare.

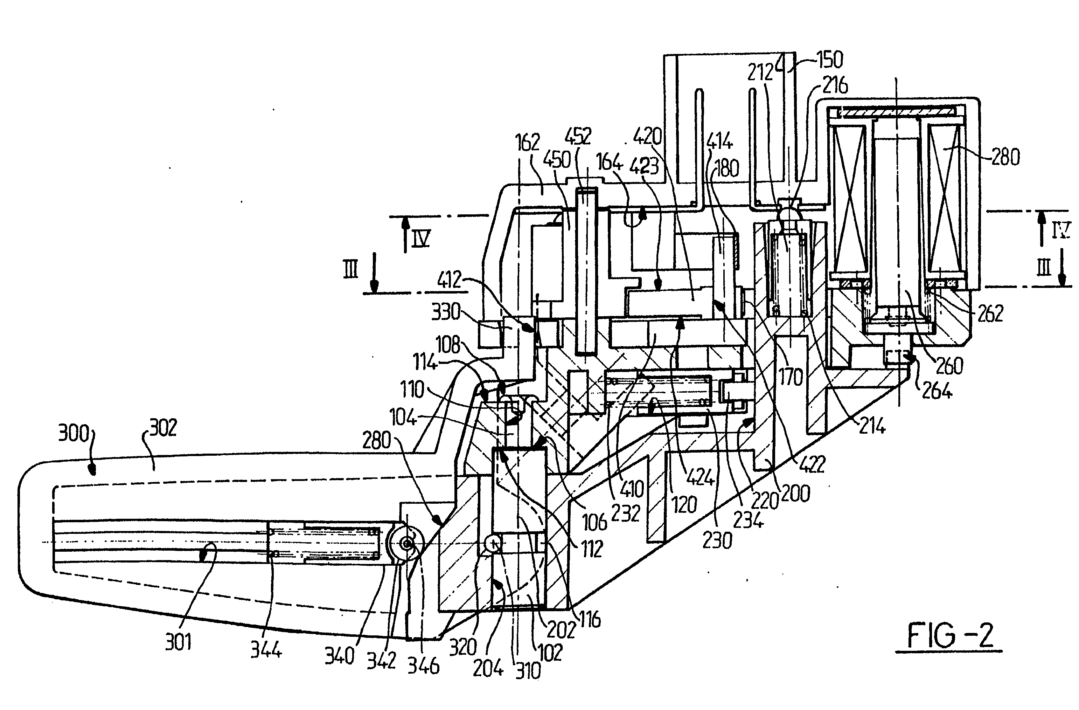

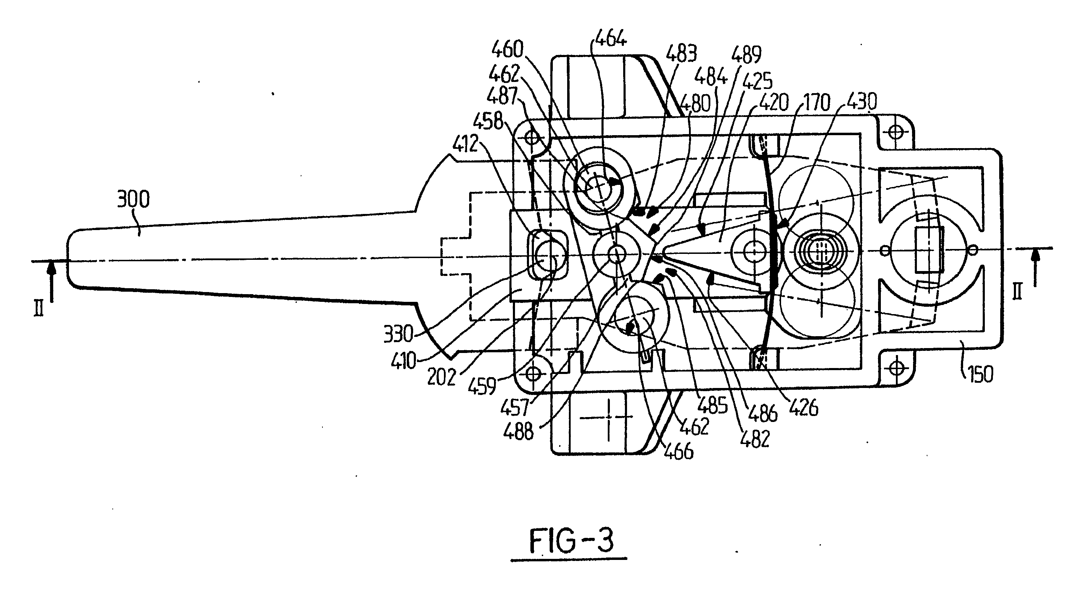

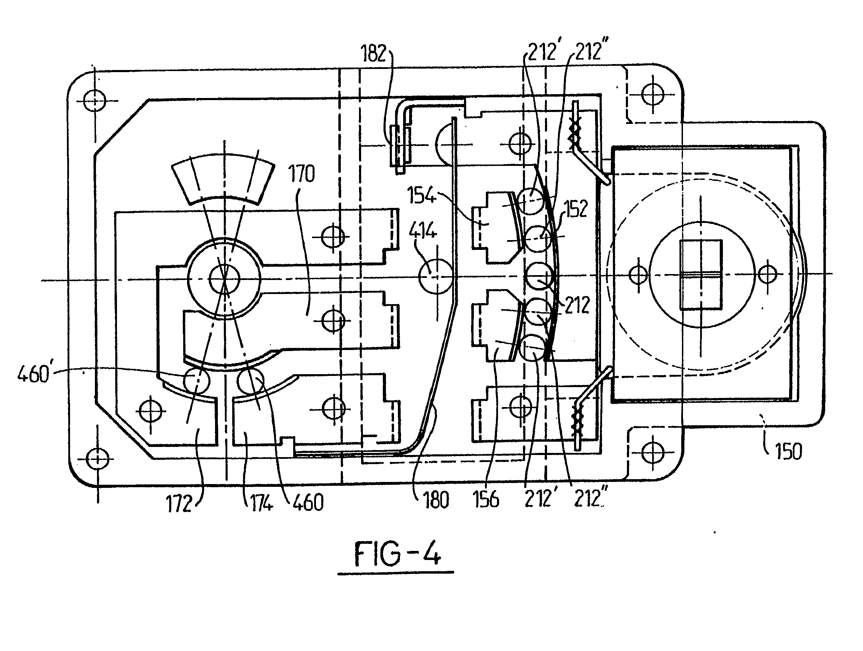

La platine 100 est formée d'une façon générale d'une plaque s'étendant perpendiculairement au plan de coupe de la figure 2 et parallèlement au plan de coupe des figures 3 et 4.

L'équipage mobile 200 est porté à pivotement autour d'un axe 202 s'étendant perpendiculairement au plan moyen de la platine 100, c'est-à-dire parallèlement au plan de coupe de la figure 2 et perpendiculairement au plan de coupe des figures 3 et 4.

L'équipage mobile 200 est porté à pivotement autour de l'axe 202 précité par un tourillon 102.

Selon l'illustration donnée sur les figures, le tourillon 102 est formé d'un canon cylindrique initialement séparé de la platine 100. Le tourillon 102, comme illustré en particulier sur la figure 2 est muni à l'une de ses extrémités d'un prolongement 104 cylindrique coaxial au corps principal mais de plus faible section. Ce prolongement 104 est introduit dans un alésage 110 réalisé dans la platine 100. La surface 106 en décrochement, définie entre le corps du tourillon 102 et le prolongement 104, transversalement à l'axe du tourillon 102 vient reposer contre une première surface 112 de la platine entourant l'alésage 110 et s'étendant transversalement à l'axe de celui-ci.

Le prolongement 104 émerge sur l'autre face 114 de la platine et est riveté sur celle-ci comme illustré en 108 sur la figure 2 pour immobiliser rigidement le tourillon 102 sur la platine 100.

Le corps du tourillon 102 pénètre dans un alésage complémentaire 204 réalisé dans l'équipage mobile 200 coaxialement à l'axe de pivotement 202 précité.

La manette 300 comprend un corps allongé 302 sur lequel intervient l'utilisateur, prolongé vers l'intérieur du commutateur·par deux voiles généralement parallèles 304, 306 formant chape. La distance séparant les surfaces internes en regard des voiles 304, 306 correspond à la largeur de l'équipage mobile 200. Ainsi, la manette 300 peut être engagée sur l'équipage mobile 200 et articulée sur celui-ci autour d'un axe secondaire 310.

Cet axe secondaire 310 s'étend perpendiculairement à l'axe 202 de pivotement de l'équipage mobile 200 et parallèlement au plan moyen de la platine support 100.

En d'autres terms, l'axe secondaire 310 s'étend généralement transversalement au plan de coupe de la figure 2 et parallèlement au plan de coupe des figures 3 et 4.

L'axe 310 d'articulation de la manette 300 sur l'équipage mobile 200 est matérialisé par une tige ou goupille 320 engagée d'une part, dans des alésages coaxiaux 312, 314 ménagés respectivement dans les voiles 304, 306, d'autre part, dans un alésage traversant 206 ménagé dans l'équipage mobile 200 transversalement à l'alésage 204 recevant le tourillon 102.

On remarquera par ailleurs à l'examen des figures annexées que l'alésage 206 recevant la goupille 320 débouche dans l'alésage 204 recevant le tourillon 102. Par ailleurs, le tourillon 102 est muni sur sa périphérie extérieure d'une rainure annulaire 116 qui, lorsque le tourillon 102 est engagé dans l'alésage 204, est placée au niveau de l'alésage 206.

Ainsi, lorsque la goupille 320 est engagée dans l'alésage 206, elle pénètre dans la rainure 116 pour interdire toute translation ultérieure entre l'équipage mobile 200 et le tourillon 102, et par conséquent entre l'équipage mobile 200 et la platine support 100, dans une direction parallèle à l'axe de pivotement 202.

En d'autres termes, lorsque la goupille 320 est engagée dans l'alésage 206, le seul mouvement relatif autorisé entre l'équipage mobile 200 et la platine support 100 correspond à un pivotement autour de l'axe 202 du tourillon 102.

L'équipage mobile 200 est muni sur sa surface 208 dirigée vers la platine support 100 d'un fût cylindrique 210 logeant un plot de contact 212 et un ressort de sollicitation 214.

L'axe du fût cylindrique 210 est parallèle à l'axe 202 de pivotement de l'équipage mobile 200.

Le ressort 214 intercalé entre le plot de contact 212 et le fond du fût 210 sollicite le plot de contact 212 vers l'extérieur du fût.

La tête du plot de contact 212 émergeant du fût 210 est munie d'un grain d'argent 216 central et d'enveloppe convexe généralement hémi-sphérique.

Le plot de contact 212 qui décrit une course d'allure circulaire lors du pivotement de l'équipage mobile 200 autour de l'axe 202 se déplace sur des lamelles de connexion 152, 154 et 156 portées par un carter 150 solidaire de la platine support 100.

Plus précisément, le plot de contact 212 coopère avec trois lamelles 152, 154, 156 portées par le carter 150. Ces lamelles 152, 154, 156 possèdent des pistes circulaires, centrées sur l'axe 202, contre lesquelles peut reposer le plot de contact 212. De préférence, une lamelle de contact principal 152 s'étend sensiblement transversalement au plan de coupe de la figure .2, symétriquement de part et d'autre de celui-ci, tandis que deux lamelles secondaires 154, 156 sont disposées respectivement de part et d'autre du plan de coupe de la figure 2, symétriquement par rapport à celui-ci. Ainsi, la lamelle principale 152 et les lamelles secondaires 154, 156 définissent une piste, en forme de couronne, centrée sur l'axe 202, sur laquelle se déplace la tête du plot de contact 212.

Dans une position de repos illustrée schématiquement sous la référence 212 sur la figure 4, le plot de contact 212 dont l'axe coïncide sensiblement avec le plan de coupe de la figure 2 repose contre la lamelle principale 152 mais est séparé des lamelles secondaires 154, 156.

Lorsque l'équipage mobile 200 est déplacé à pivotement autour de l'axe 202, de part et d'autre du plan de coupe de la figure 2, comme illustré en 212' et 212" sur la figure 4 le plot de contact 212 relie la lamelle de contact principale 152 avec l'une ou l'autre des lamelles de contact secondaires 154, 156 pour alimenter le filament d'un indicateur de changement de direction associé.

De préférence, la position du plot de contact référencée 212" sur la figure 4 correspond à une position instable généralement dénommée position autoroute, tandis que la position du plot de contact référencé 212' sur la figure 4 correspond à une position stable. Ces dispositions seront décrites plus en détail par la suite.

L'équipage mobile 200 est sollicité vers la position de repos précitée dans laquelle l'axe du plot de contact 212 coïncide avec le plan de coupe de la figure 2 par un pion 230 sollicité par un ressort 232 et portant un galet 234.

Le pion 230 et le ressort 232 sont placés dans un logement 120 ménagé dans la platine support 100, sensiblement parallèlement au plan de coupe des figures 2, 3 et 4. En d'autres termes, le ressort 232 exerce sur le pion 230 et le galet 234 une force dirigée radialement par rapport à l'axe de pivotement 202.

Le galet 234 est porté à pivotement sur le pion 230 autour d'un axe 236 s'étendant parallèlement à l'axe 202 de pivotement de l'équipage mobile.

Le ressort 232 sollicite le pion 230 et le galet 234 vers l'extérieur du logement 120, contre une rampe 220 ménagée sur l'équipage mobile 200.

La rampe 220 est définie par des génératrices parallèles à l'axe 202 de pivotement de l'équipage mobile 200.

La rampe 220 présente une concavité dirigée vers cet axe de pivotement 202.

La rampe 220 n'est pas symétrique de révolution autour de l'axe 202. Par contre, la rampe 220 est symétrique par rapport au plan de coupe de la figure 2.

La plus grande distance entre l'axe de pivotement 202 et la rampe 220 est définie dans le plan de coupe de la figure 2.

La rampe 220 se rapproche de l'axe 202, symétriquement, en éloignement de part et d'autre du plan de coupe de la figure 2.

Ainsi, le ressort 232 sollicite le galet 234 vers le fond de la rampe 220 coïncidant avec le plan de coupe de la figure 2 pour définir la position de repos précitée dans laquelle le plot de contact 212 repose contre la lamelle principale 152 mais est éloigné des lamelles secondaires 154 et 156.

Lorsque, après avoir déplacé l'équipage mobile 200 à pivotement sur une faible amplitude, autour de l'axe 202, pour porter le plot de contact 212 dans la position illustrée en 212″ sur la figure 4 (ce plot vient juste de relier la lamelle principale 152 et l'une ou l'autre des lamelles secondaires 154, 156) la sollicitation exercée sur l'équipage mobile 200 est relâchée, le ressort 232 coopérant avec le pion 230 et le galet 234 ramène l'équipage mobile 200 dans la position de repos précitée et éloigne donc le plot 212 des lamelles secondaires 154, 156.

En d'autres termes, les positions de l'équipage mobile 200, de part et d'autre de la position de repos précitée, correspondant à la position du plot de contact illustrée en 212″ sur la figure 4, constituent des positions instables.

Par contre, lorsque l'équipage mobile 200 est entraîné à pivotement autour de l'axe 202 sur une course supérieure correspondant aux positions du plot illustrées en 212′ sur la figure 4, l'équipage mobile 200 est verrouillé en position par la coopération d'un poussoir 260 et de crantages 270, 272 prévus sur l'équipage mobile 200.

Les positions de l'équipage mobile correspondant aux positions du plot de contact illustrées en 212′ sur la figure 4 correspondent donc à des positions stables.

Le poussoir 260 est porté par la platine support 100. Il est sollicité vers la surface 208 de l'équipage mobile 200 par un ressort 262. Le poussoir 260 s'étend parallèlement à l'axe de pivotement 202 et le ressort 262 exerce sur le poussoir 260 une force dirigée parallèlement à l'axe 202, vers l'équipage mobile.

Les crantages 270, 272 précités sont ménagés sur la surface 208 de l'équipage mobile 200 en saillie et vers la platine support 100.

Selon le mode de réalisation représenté sur les figures, la tête 264 du poussoir 260 reposant contre la surface 208 de l'équipage mobile 200 est une tête évasée par rapport au tronc du poussoir 260, mais effilée en direction de l'équipage mobile 200.

Plus précisément, la tête 264 du poussoir 260 est définie par deux plans convergeant en direction de l'équipage mobile 200 et qui se rejoignent au niveau d'une arête rectiligne parallèle à la surface 208 de l'équipage mobile 200 et radiale par rapport à l'axe de pivotement 202.

Les crantages 270, 272 présentent de préférence une section droite triangulaire, dans un plan de coupe perpendiculaire à un rayon dressé à partir de l'axe de pivotement 202.

Le poussoir 260 est réalisé au moins partiellement en matériau ferromagnétique.

Le poussoir 260 est engagé dans une bobine 280 portée par le carter 150.

Ainsi, lorsque la bobine 280 est alimentée, elle attire le noyau 260 à l'encontre de la sollicitation élastique du ressort 262 pour éloigner la tête 264 du poussoir 260, de l'équipage mobile 200.

En position de repos de l'équipage mobile 200 (position du plot de contact référencée 212 sur la figure 4) la tête 264 du poussoir 260 est placée entre les crantages 270, 272.

Lorsque l'équipage mobile 200 est déplacé dans ces positions instables correspondant aux positions du plot de contact référencées 212″ sur la figure 4, la tête 264 du poussoir 260 se déplace entre les crantages 270, 272. Ces crantages 270, 272 servent de butée à la tête 264 du poussoir 260 définissant les positions instables précitées. Ainsi, lorsque la sollicitation exercée sur l'équipage mobile 200 est relâchée, le ressort 232 coopérant avec le pion 230 et le galet 234 ramène l'équipage mobile 200 dans la position de repos.

Par contre, lorsque l'équipage mobile 200 est déplacé dans l'une des positions stables correspondant aux positions du plot de contact référencées 212′ sur la figure 4, la tête 264 du poussoir 260 franchit l'un des crantages 270, 272 et est repoussée élastiquement contre la surface 208 de l'équipage mobile par le ressort 262. La sollicitation exercée par le ressort 262 sur le poussoir 260 empêche, lorsqu'aucune autre sollicitation n'est exercée sur l'équipage mobile 200, que celui-ci ne soit ramené dans la position de repos par le ressort 232.

Par contre, lorsque après que l'équipage mobile 200 ait atteint l'une des positions stables correspondant au déplacement du plot en 212′ selon l'illustration de la figure 4, la bobine 280 est alimentée, le poussoir 260 est attirée à l'intérieur de la bobine 280 en éloignement de l'équipage mobile 200 pour supprimer tout engagement entre la tête 264 du poussoir 260 et les crantages 270, 272, et ainsi supprimer tout verrouillage de l'équipage mobile 200. Le ressort 232 ramène alors l'équipage mobile 200 en position de repos.

De préférence, comme cela est représenté sur la figure 2, le poussoir 260 est muni au niveau de la tête 264 d'une collerette évasée 266 qui vient en appui contre la platine 100 sous l'effet de la sollicitation du ressort 262, lorsque la bobine 280 n'est pas alimentée, de telle sorte que la tête 264 ne repose pas contre l'équipage mobile 200 afin d'éviter de freiner le pivotement de celui-ci autour de l'axe 202.

L'homme de l'art comprendra aisément à l'examen des figures annexées et à la lecture de la description qui précède que la manette et l'équipage mobile 200 sont liés à rotation autour de l'axe 202, grâce à l'engagement de la chape définie par les voiles 304, 306 sur l'équipage mobile 200.

On va maintenant décrire la structure de l'ensemble de commutation 400.

Cet ensemble comprend un coulisseau 410 guidé à translation par la platine support 100 dans une direction référencée A sur les figures et s'étendant parallèlement aux plans de coupe des figures 2, 3 et 4.

Le coulisseau 410 porte une palette 420 et coopère avec une bascule 450.

Le coulisseau 410 est déplacé à translation dans la direction A par un dcigt de commande 330 solidaire de la manette 300, s'étendant transversalement à l'axe 310 et pénétrant dans une lumière 412 ménagée dans le coulisseau 410.

Le coulisseau 410 porte un tourillon 414 s'étendant parallèlement à l'axe de pivotement 202.

La palette 420 est munie d'un alésage traversant 422. Le tourillon 414 précité est engagé dans l'alésage 422 pour guider la palette 420 à pivotement autour du tourillon 414.

Le coulisseau 410 est placé entre la platine support 100 et la bascule 450.

Cette dernière est portée à pivotement par un tourillon 452 s'étendant parallèlement à l'axe de pivotement 202. Le tourillon 452 est engagé dans un fût 160 solidaire de la platine support 100.

Pour l'essentiel, la bascule 450 est formée de trois blocs cylindriques 454, 455, 456 d'axes parallèles entre eux et parallèles à l'axe 202 précité. Les blocs cylindriques 454, 455, 456 sont reliés par des pontets 457, 458.

Le bloc central 455 est muni d'un alésage traversant 459 dans lequel est engagé le tourillon d'articulation précitée 452. La bascule 450 est équipée d'un plot de contact 460 et d'un bloc d'indexage 462.

Ces derniers sont logés dans des alésages borgnes 464, 466 réalisés dans les blocs latéraux 454, 456 de la bascule 450 et débouchant sur la surface de ceux-ci opposée au coulisseau 410.

Le plot de contact 460 et le poussoir d'indexage 462 sont sollicités vers l'extérieur des alésages borgnes précités 464, 466 par des ressorts 468, 470.

Le poussoir indexage 462 se déplace sur des cames ménagées sur la surface interne 154 du fond 152 du boîtier, pour définir deux positions stables de la bascule 450 autour de l'axe du tourillon 452.

Le plot de contact 460 se déplace sur des lamelles de connexion 170, 172, 174 portées par le fond 162 du boîtier.

De préférence, le plot de contact 460 repose sur les lamelles 170, 172, 174 par l'intermédiaire d'un grain d'argent 4800 d'enveloppe convexe hémisphérique. La bascule 450 est associée à une paire de cames 480, 482 coopérant avec la palette 420. La palette 420 possède un profil effilé en direction de la bascule 450.

Plus précisément encore, la palette 420 est pour l'essentiel définie par deux faces principales 423, 424 parallèles entre elles et parallèles au plan de coupe des figures 3 et 4, et deux faces latérales 425, 426 perpendiculaires au plan de coupe des figures 3 et 4 et convergeant en direction de la bascule 450.

Les cames 480 et 482 sont positionnées de façon à être alternativement placées en regard de la palette 420, selon la position de la bascule 450 autour du tourillon 452.

Chacune des cames 480, 482 présente une concavité dirigée vers la palette 420. Les cames 480, 482 sont profilées parallèlement à l'axe du tourillon d'articulation 452. C'est-à-dire que les cames 480, 482 présentent une section constante dans tout plan de coupe perpendiculaire à l'axe du tourillon d'articulation 452.

Plus précisément, chaque came 480, 482 est définie par deux plans 483, 484 d'une part, 485, 486 d'autre part qui divergent en direction de la palette 420. Les fonds des cames correspondant à la zone de convergence des plans précités 483, 484 d'une part, et 485, 486 d'autre part, sont référencés 487, 488 sur la figure 3.

Par ailleurs, le sommet des cames disposé dans le plan de symétrie de la bascule 450 et correspondant à la zone d'intersection des plans 484, 486 appartenant respectivement aux cames 480, 482 est référencé 489 sur la figure 3.

La platine support 100 porte une lame élastique 170 qui vient en appui contre une surface plane coopérante 430 prévue sur la palette 420. La lame élastique 170 est formée d'une lame plane allongée. La longueur de la lame élastique 170 s'étend perpendiculairement au plan de coupe de la figure 2 et parallèlement aux plans de coupe des figures 3 et 4.

La largeur de la lame élastique 170 s'étend perpendiculairement aux plans de coupe des figures 3 et 4 et parallèlement au plan de coupe de la figure 2.

Ainsi, lorsque la palette 420 repose par sa surface 430 contre la lamelle élastique 170, cette dernière tend à ramener la palette 420 dans une position de repos illustrée sur la figure 3 dans laquelle la pointe effilée de la palette 420, correspondant à la zone de convergence des faces latérales 425, 426, coïncide avec le plan de symétrie du commutateur défini par le plan de coupe de la figure 2.

Néanmoins, lorsque par actionnement de la manette 300 le coulisseau 410 et la palette 420 sont déplacés en rapprochement de la bascule 450, la palette 420 peut pivoter autour de l'axe du tourillon 414, alternativement de part et d'autre du plan de symétrie du commutateur coïncidant avec le plan de coupe de la figure 2.

Les cames 480, 482 sont positionnées sur la bascule 450 de façon à être placées alternativement en regard de la palette 420 selon la position de la bascule 450.

La manette 300 est sollicitée vers une position de repos dans laquelle la palette 420 est éloignée de la bascule 450 par un pion 340 portant un galet 342 et associé à un ressort de sollicitation 344.

Le galet 342 est porté à pivotement par le pion 340 autour d'un axe 346 parallèle à l'axe 310 de pivotement de la manette 300 sur l'équipage mobile 200.

Le pion 340 et le ressort 344 sont placés dans un logement 301 ménagé dans la manette 300 sensiblement perpendiculairement aux axes de pivotement 202 et 310. Le ressort 344 sollicite le pion 340 vers l'extérieur du logement 301 et sollicite le galet 340 contre une surface 280 de l'équipage mobile 200.

Cette surface 280 servant d'appui au galet 342 s'étend parallèlement à l'axe 310 d'articulation de la manette 300. La surface 280 n'est pas symétrique de révolution autour de l'axe 310.

Selon la représentation de la figure 2, la surface d'appui 280 converge vers l'axe 310 dans le sens des aiguilles d'une montre.

Ainsi, le galet 342 sollicité en appui contre la surface 280 par le ressort 344 tend à faire pivoter la manette 300 dans le sens des aiguilles d'une montre selon la représentation de la figure 2.

De là, et grâce à la coopération définie entre le doigt de commande 330 et la lumière 412 ménagée dans le coulisseau 410, le ressort 344 sollicite le coulisseau 410 vers la droite de la figure 2. Le déplacement du coulisseau 410 sous la sollicitation du ressort 344 est limité lorsqu'une surface 303 de la manette 300 vient en appui contre une surface 201 de l'équipage mobile 200.

Cette position du tiroir 410 pour laquelle la palette 420 repose contre la lame élastique 170 correspond à une position de repos de la manette 300. Dans cette position de repos, le tourillon 414 portant à pivotement la palette 420, qui émerge au-delà de celle-ci, maintient une lame élastique 180 portée par le carter 150 en éloignement d'un plot de contact 182.

Par contre, lorsque la manette 300 est déplacée dans le sens contraire des aiguilles d'une montre autour de l'axe 310, à l'encontre de la sollicitation élastique du ressort 344, le doigt de commande 330 pénétrant dans la lumière 412 déplace la palette 410 dans la direction de translation A vers la gauche de la figure 2 de telle sorte que le déplacement du tourillon 414 autorise un déplacement de la lame 180 contre le plot 182 pour réaliser un appel phare.

La position des cames 480 et 482 sur la bascule 150 est déterminée de telle sorte que le sommet 489 des cames soit disposé respectivement de part et d'autre d'un plan de symétrie du commutateur coïncidant avec le plan de coupe de la figure 2 et passant par l'axe des tourillons 452 et 414 (plan qui coïncide également avec le plan de symétrie de lapalette 420 en position de repos de celle-ci), selon que la bascule 450 est placée dans l'une ou l'autre de ces deux positions indexées par le poussoir 462.

Ainsi, la tête effilée de la palette 420 vient reposer alternativement contre les plans 484 et 486 des cames, lorsque la manette 300 est déplacée à pivotement autour de l'axe 310, et de là induit une translation du coulisseau 410 et de la palette 420, telle que cette dernière se rapproche des cames 480, 482.

Lorsque le mouvement de pivotement de la manette 300 autour de l'axe 310 est prolongé, la tête de la palette 420 glisse contre les surfaces 484, 486 des cames, vers le fond 487, 488 de celles-ci. Ce déplacement s'accompagne d'un léger pivotement de la palette 420 alternativement de part et d'autre du plan de coupe de la figure 2. Par la suite, la palette 420 exerce un couple de rotation autour de l'axe du tourillon 452, sur la bascule 450, alternativement dans un sens puis dans l'autre, selon la came 480, 482 placée en regard de la palette 420, pour commuter la bascule 450 entre ses deux positions autour de l'axe du tourillon 452.

Le plot de contact 460 se déplace de préférence sur des lames de connexion 170, 172, 174 pour assurer une inversion électrique des fonctions code/phare.

La lamelle 170 constitue une lamelle d'alimentation intermédiaire. La lamelle 174 assure l'alimentation des filaments code du véhicule automobile, tandis que la lamelle 172 assure l'alimentation des filaments phare du véhicule automobile.

Comme cela est illustré sur la figure 4, en synchronisme avec le déplacement de la bascule 450, le plot de contact 460 porté par la bascule se déplace entre une première position illustrée sous la référence 460 sur la figure 4 pour laquelle le plot 460 relie les lamelles 170 et 174 pour assurer l'alimentation des filaments code, si la lamelle 170 est sous tension, et une seconde position représentée sous la référence 460' sur la figure 4 dans laquelle le plot 460 relie la lamelle 170 et la lamelle 172 pour assurer l'alimentation des filaments phare du véhicule automobile.

On va maintenant rappeler schématiquement le fonctionnement du commutateur électrique conforme à la présente invention.

En position de repos, le galet 234 est sollicité par le ressort 232 contre le fond de la rampe 220. Le plot de contact 212 repose contre la lame de contact principal 152 mais est écarté des lames de contact secondaires 154, 156.

La tête du poussoir de verrouillage 260 est placée entre les crans 270 et 272. Le ressort 344 sollicite la manette 300 dans le sens des aiguilles d'une montre selon la représentation de la figure 2. Le coulisseau 410 est donc sollicité vers la droite de la figure 2. La palette 420 est éloignée des cames et placée en regard de la came 480. Le plot de contact 460 relie les lamelles 170 et 174. Le tourillon 414 écarte la lamelle 180 du plot 182.

Lorsque la manette 300 est déplacée à pivotement autour de l'axe 202, sur une faible amplitude, d'un côté ou de l'autre, par rapport à la position de repos précitée, le galet 234 roule sur la rampe 220 et comprime le ressort 232. La tête du poussoir de verrouillage 260 se déplace entre les crans 270 et 272 qui servent de butée et limitent le pivotement de la manette 300 en position instable. Le plot de contact 212 est déplacé dans la position référencée 212" sur la figure 4 pour relier la lamelle de contact principal 152 avec l'une ou l'autre des lamelles de contact secondaires 154, 156 et alimenter l'un des indicateurs de changement de direction associés. L'ensemble de commutation 400 reste dans la position de repos précitée, la lumière 412 recevant le doigt de commande 330 étant, en position de repos du coulisseau 410 coaxiale à l'axe 202.

Lorsque la sollicitation exercée sur la manette 300 est relâchée, le ressort 232 ramène l'équipage mobile 200, la manette 300 et le plot de contact 212 associé vers la position de repos précitée.

Par contre, lorsque l'amplitude de pivotement de la manette 300 et de l'équipage 200, autour de l'axe 202, est amplifiée la tête 264 du poussoir de verrouillage 260 franchit les crans 270 ou 272 pour verrouiller le tiroir 200 et le plot de contact 212 dans la position référencée 212' sur la figure 4. L'un des indicateurs de changement de direction est alors alimenté de façon stable.

Le déverrouillage de l'équipage mobile 200 peut être obtenu par alimentation de la bobine 280 afin d'attirer le poussoir 260 en éloignement des crans 270 , 272 solidaires de l'équipage mobile 200. Là encore, le retour en position de repos de l'équipage mobile 200 est induit par le ressort 232.

Le déverrouillage de l'équipage mobile 200 peut également être opéré par action manuelle sur la manette de commande 300, en exerçant sur celle-ci une force supérieure à celle exercée par le ressort 262.

La position 212″ du plot de contact 212 correspond par conséquent à la position instable dénommée généralement position autoroute, tandis que la position 212' du plot 212 correspond à une position stable déverrouillée soit à distance par alimentation de la bobine 280, soit par intervention manuelle sur la manette 300.

Lorsque par contre la manette 300 est déplacée à pivotement autour de l'axe 310 dans le sens contraire des aiguilles d'une montre selon la figure 2, le doigt de commande 330 entraîne le déplacement du coulisseau 410 vers la gauche de la figure 2, c'est-à-dire en rapprochement de la came 480. Si l'amplitude du pivotement de la manette 300 autour de l'axe 310 est limitée, la lame 180 vient reposer contre le plot de contact 182 pour réaliser un appel phare, mais la palette 420 n'atteint pas le fond de la came 480.

Par contre, si l'amplitude du pivotement de la manette 300 est plus ample, la pointe de la palette 420 peut atteindre le fond 487 de la came 480 pour exercer un couple sur la bascule 450, dans le sens contraire des aiguilles d'une montre selon la représentation de la figure 3, afin de déplacer la bascule vers une seconde position dans laquelle le plot 460 relie maintenant les lamelles 170 et 172 pour assurer l'alimentation des phares du véhicule automobile.

Lorsque la manette 300 est relâchée,le ressort 344 sollicite la manette dans le sens des aiguilles d'une montre et donc le coulisseau 410 vers la droite de la figure 2. La palette 420 s'éloigne donc de la bascule 450. La palette 420 reprend sa position de repos symétrique par rapport au plan de coupe de la figure 2 grâce à la sollicitation élastique de la lamelle 170.

La pointe de la palette 420 est alors placée en regard de la came 482.

La bascule 450 est maintenue dans la position d'alimentation phare par le poussoir d'indexation 462.

Le pivotement suivant de la manette 300 autour de l'axe 310, dans le sens contraire des aiguilles d'une montre assure un nouveau déplacement en translation du coulisseau 410 vers la gauche de la figure 2. La palette 420 glisse alors contre le fond 488 de la came 482 pour appliquer sur la bascule 450 un couple de pivotement dans le sens des aiguilles d'une montre selon la figure 3. On assure alors une nouvelle commutation de la bascule 450 vers la position de repos précitée et de là une nouvelle inversion de la fonction code phare, le plot de contact 460 reliant à nouveau les lamelles 170 et 174 assurant l'alimentation du filament code de l'éclairage du véhicule automobile.

On remarquera que le pivotement de la manette 300 et de l'équipage mobile 200 autour de l'axe 202 n'agit que sur les contacts du premier type formés par le plot 212 et les lames de contact 152, 154, 156, et n'agit pas sur les contacts du second type formés par les lamelles 180, 182, 170, 172, 174 et le plot de contact 460.

Par contre, le pivotement de la manette 300 autour de l'axe 310 n'agit que sur les contacts du second type et n'intervient pas sur les contacts du premier type.

Par ailleurs, on remarquera que le pivotement de l'équipage mobile 200 autour de l'axe 202 peut être obtenu quelle que soit la position de la manette 300 autour de l'axe 310, et inversement.

On remarquera également que la commande des différents contacts électriques du commutateur conforme à la présente invention est assurée à l'aide d'une manette 300 unique.

A titre d'exemple, les forces de sollicitation exercées par les ressorts 232 et 262 sur le pion 230 et le poussoir de verrouillage 260 sont généralement orthogonales, selon le mode de réalisation précédemment décrit, mais néanmoins ces forces de sollicitation pourraient être parallèles entre elles, en s'étendant soit radialement ou obliquement par rapport à l'axe de pivotement 202, soit parallèlement à cet axe, dans un plan passant par cet axe 202.

## Revendications

1. Commutateur, en particulier pour la commande des feux d'un véhicule automobile, comprenant
- une platine support (100) portant des contacts électriques (152, 154, 156, 170, 172, 174),
- un équipage mobile (200) porté à pivotement sur la platine support entre une position de repos et au moins une position de travail, et équipé d'au moins un plot de contact (212) apte à coopérer avec les contacts électriques portés par la platine,
- des moyens (232) sollicitant élastiquement l'équipage mobile vers sa position de repos,
- un élément de verrouillage (260) réalisé au moins partiellement en matériau ferromagnétique, sollicité par ressort, intercalé entre la platine (100) et l'équipage mobile (200) pour verrouiller l'équipage mobile en position choisie, et
- une bobine (280) adaptée, par contrôle de son alimentation, pour déplacer l'élément de verrouillage (260) à l'encontre de la sollicitation exercée par le ressort (262 ) qui lui est associé, pour déverrouiller l'équipage mobile (200) et autoriser son retour vers la position de repos, caractérisé par le fait que l' élément de verrouillage (260 ) est formé d'un poussoir ou noyau plongeur engagé dans la bobine (280) et susceptible de translation dans un plan passant par l'axe de pivotement (202) de l'équipage mobile, le poussoir (260) étant porté par la platine (100) et sollicité vers une zone de l'équipage mobile (200) équipée de crantages (270, 272) aptes à assurer en coopération avec la tête (264) du poussoir le verrouillage et l'indexage de l'équipage mobile (200) en position de travail.

2. Commutateur selon la revendication 1, caractérisé par le fait que les moyens sollicitant élastiquement l'équipage mobile (200) vers sa position de repos comprennent un pion (230) sollicité par ressort (232) qui porte un galet (234) roulant sur une came incurvée (220).

3. Commutateur selon l'une des revendications 1 ou 2 caractérisé par le fait que l'équipage mobile (200) est porté à pivotement sur la platine (100) entre une position de repos et deux positions de travail symétriques situées respectivement de part et d'autre de la position de repos.

4. Commutateur selon les revendications 1 à 3, prises en combinaison, caractérisé par le fait que la zone de l'équipage mobile (200) vers laquelle est sollicitée la tête (264) du poussoir (260) porte deux crantages (270, 272) symétriques, disposés respectivement de part et d'autre de la position de la tête du poussoir lorsque l'équipage mobile est placé en position de repos et par le fait que la came incurvée (220) contre laquelle repose le galet (234) des moyens sollicitant élastiquement l'équipage mobile en position de repos est concave en direction de l'axe de pivotement (202) de l'équipage mobile et se rapproche de celui-ci, symétriquement, en éloignement de la zone d'appui du galet (234) lorsque l'équipage mobile est en position de repos.

5. Commutateur selon l'une des revendications 1 à 4, caractérisé par le fait que la zone de l'équipage mobile (200) vers laquelle est sollicitée la tête (264) du poussoir (260) porte deux crantages (270, 272) symétriques, séparés entre eux d'une distance telle que la tête du poussoir peut se déplacer librement entre ces crantages pour définir deux positions instables de l'équipage mobile, symétriques par rapport à la position de repos.

6. Commutateur selon l'une des revendications 1 à 5, caractérisé par le fait que l'équipage mobile (200) est porté à pivotement sur la platine (100) autour d'un axe principal (202) et par le fait que l'équipage mobile (200) porte une manette (302) à pivotement autour d'un axe secondaire (310) perpendiculaire à l'axe principal (202).

7. Commutateur selon la revendication 6, caractérisé par le fait que l'équipage mobile (200) est porté à pivotement sur la platine (100) autour de l'axe principal (202) par un tourillon principal (102) et par le fait que la manette (300) est portée à pivotement sur l'équipage mobile (200) autour de l'axe secondaire (310) par l'intermédiaire d'un tourillon secondaire (320) qui pénètre dans une rainure annulaire (116) ménagée sur le tourillon principal (102) pour immobiliser l'équipage mobile (200) à translation sur le tourillon principal (202).

8. Commutateur selon l'une des revendications 6 et 7, caractérisé par le fait qu'il comprend un coulisseau (410) monté à translation sur la platine support (100) et commandé à déplacement par la rotation de la manette (300) autour de l'axe secondaire (310), une palette (420) portée par le coulisseau (410) pour suivre les déplacements à translation de celui-ci et une bascule (450) montée à pivotement entre deux positions sur la platine support (100) et associée à une paire de cames d'entraînement (480, 482) telle que les cames soient alternativement placées en regard de la palette (420) selon la position de la bascule (450) et que les entraînements successifs à pivotement de la manette (300) autour de l'axe secondaire (310) portent alternativement la palette (420) en prise avec l'une ou l'autre des cames (480, 482) pour déplacer la bascule (450) alternativement entre ces deux positions.

9. Commutateur selon l'une des revendications 6 à 8, caractérisé par le fait que la manette (300) est sollicitée élastiquement vers une position de repos par un pion (340) sollicité par ressort (344) et portant un galet (342).

10. Commutateur selon l'une des revendications 1 à 9 caractérisé par le fait que le plot de contact (212) porté par l'équipage mobile (200) permet de commander les indicateurs de changement de direction d'un véhicule automobile.

**Patentansprüche**

1. Kommutator, insbesondere zum Ansteuern von Leuchten in Kraftfahrzeugen, mit
– einer Trägerplatine (100), die elektrische Kontakte (152, 154, 156, 170, 172, 174) trägt,
– einem beweglichen Bauteil (200), das auf der Trägerplatine zwischen einer Ruhestellung und wenigstens einer Arbeitsstellung schwenkbar getragen und mit wenigstens einem Kontaktsatz (212) versehen ist, der zum Zusammenwirken mit den elektrischen Kontakten der Platine ausgelegt ist,
– einer Einrichtung (232), die das bewegliche Bauteil in seine Ruhestellung hin elastisch belastet,
– einem Verriegelungselement (260), wenigstens teilweise aus ferromagnetischem Material, das federbelastet ist und das zwischen der Platine (100) und dem beweglichen Bauteil (200) angeordnet ist, um das bewegliche Bauteil in einer gewählten Stellung festzulegen, und
– einer Spule (280), die durch Steuerung ihrer Energiezufuhr zum Verlagern des Verriegelungselementes (260) gegenüber der von der ihr zugeordneten Feder (262) ausgeübten Last ausgelegt ist, um das bewegliche Bauteil (200) zu entriegeln und dessen Rückkehr in die Ruhestellung zuzulassen, dadurch gekennzeichnet, daß das Verriegelungselement (260) aus einem in die Spule (280) eingreifenden Stößel oder Tauchanker gebildet ist, der eine Translationsbewegung in einer durch die Schwenkachse (202) des beweglichen Bauteils verlaufenden Ebene durchführen kann, wobei der Stößel (260) von der Platine (100) getragen und gegen einen Bereich des beweglichen Bauteils (200) belastet ist, der mit Rasten (270, 272) versehen ist, die im Zusammenwirken mit dem Kopf (264) des Stößels das Verriegeln und Festhalten des beweglichen Bauteils (200) in der Arbeitsstellung sicherstellen.

2. Kommutator nach Anspruch 1, dadurch gekennzeichnet, daß die Einrichtung, die das bewegliche Bauteil (200) in seine Ruhestellung hin elastisch belastet, ein durch eine Feder (232) belastetes Metallstück (230) aufweist, das einen auf einem einwärts gekrümmten Nocken (220) laufenden Rollkörper (234) trägt.

3. Kommutator nach Anspruch 1 oder 2, dadurch gekennzeichnet, daß das bewegliche Bauteil (200) auf der Trägerplatine (100) zwischen einer Ruhestellung und zwei beidseitig der Ruhestellung jeweils symmetrisch liegenden Arbeitsstellungen schwenkbar getragen ist.

4. Kommutator nach den Ansprüchen 1 bis 3, in Kombination genommen, dadurch gekennzeichnet, daß der Bereich des beweglichen Bauteils, gegen den der Kopf (264) des Stößels (260) lastet, zwei symmetrische Rasten (270, 272) trägt, die jeweils auf einer der Seiten der Stellung des Kopfes des Stößels angeordnet sind, wenn das bewegliche Bauteil in die Ruhestellung gebracht ist, und daß der einwärts gekrümmte Nocken (220), an dem der Rollkörper (234) der Einrichtung, die das bewegliche Bauteil (200) in seine Ruhestellung hin elastisch belastet, liegt, konkav in Richtung der Schwenkachse (202) des beweglichen Bauteiles ist und sich bei Entfernen vom Anschlagbereich des Rollkörpers (234), wenn das bewegliche Bauteil in Ruhestellung ist, an dieses symmetrisch nähert.

5. Kommutator nach einem der Ansprüche 1 bis 4, dadurch gekennzeichnet, daß der Bereich des beweglichen Bauteils, gegen den der Kopf (264) des Stößels (260) lastet, zwei symmetrische Rasten (270, 272) trägt, die voneinander durch einen solchen Abstand getrennt sind, daß der Kopf des Stößels sich frei zwischen den Rasten verlagern kann, um zwei instabile Positionen des beweglichen Bauteils, symmetrisch in bezug auf die Ruhestellung, zu definieren.

6. Kommutator nach einem der Ansprüche 1 bis 5, dadurch gekennzeichnet, daß das bewegliche Bauteil (200) schwenkbar um eine Hauptachse (202) auf der Platine (100) getragen ist und daß das bewegliche Bauteil (200) einen Bedienhebel (300) trägt, der um eine Sekundärachse (310) senkrecht zur Hauptachse (202) schwenkbar ist.

7. Kommutator nach Anspruch 6, dadurch gekennzeichnet, daß das bewegliche Bauteil (200) von einem Haupt-Lagerzapfen (102) schwenkbar um eine Hauptachse (202) auf der Platine (100) getragen ist und daß der Bedienhebel (300) um eine Sekundärachse (310) senkrecht zur Hauptachse (202) auf dem beweglichen Bauteil (200) über einen zwischengeschalteten Sekundär-Lagerzapfen (320) schwenkbar getragen ist, der in eine auf dem Haupt-Lagerzapfen (102) vorgesehene ringförmige Nut (116) eingreift, um das bewegliche Bauteil (200) in bezug auf die Verschiebung auf dem Haupt-Lagerzapfen (102) unbeweglich zu halten.

8. Kommutator nach Anspruch 6 oder 7, dadurch gekennzeichnet, daß er einen Schieber (410), der auf der Trägerplatine (100) verschiebbar angeordnet und durch die Drehung des Bedienhebels (300) um die Sekundärachse (310) gesteuert verlagerbar ist, eine von dem Schieber (410) getragene Platte (420), die dessen Verschiebung nachfolgt, und eine Kippeinrichtung (450) aufweist, die zwischen zwei Stellungen schwenkbar auf der Trägerplatine (100) angebracht und einem Paar Führungsnocken (480, 482) so zugeordnet ist, daß die Nocken abwechselnd gegenüber der Platte (420) gemäß der Stellung der Kippeinrichtung (450) verlagerbar sind und daß die nachfolgenden Schwenkbewegungen des Bedienhebels (300) um die Sekundärachse (310) abwechselnd die Platte (420) in Eingriff mit einem der beiden Nocken (480, 482) bringen, um die Kippeinrichtung (450) abwechselnd zwischen diesen beiden Stellungen zu verlagern.

9. Kommutator nach einem der Ansprüche 6 bis 8, dadurch gekennzeichnet, daß der Bedienhebel (300) durch ein durch eine Feder (344) belastetes Metallstück (340), welches einen Rollkörper (342) trägt, elastisch in eine Ruhestellung bewegt wird.

10. Kommutator nach einem der Ansprüche 1 bis 9, dadurch gekennzeichnet, daß der vom beweglichen Bauteil (200) getragene Kontaktsatz (212) die Fahrtrichtungsanzeiger eines Fahrzeugs steuern kann.

**Claims**

1. Switch, especially for controlling the lights of a motor vehicle, comprising:
- a supporting board (100) carrying electrical contacts (152, 154, 156, 170, 172, 174),
- a movable element (200) carried on the supporting board pivotably between a position of rest and at least one working position and equipped with at least one contact stud (212) capable of interacting with the electrical contacts carried by the board,
- means (232) stressing the movable element elastically towards its position of rest,
- a locking element (260) produced at least partially from ferromagnetic material, spring-stressed and interposed between the board (100) and movable element (200) in order to lock the movable element in the seleoted position, and
- a coil (280) designed, by the control of its feed, to move the locking element (260) counter to the stress exerted by the spring (262) associated with it, in order to release the movable element (200) and allow it to return to the position of rest, characterized in that the locking element (260) is formed from a pusher or plunger core engaged in the coil (280) and capable of translational motion in a plane passing through the pivot axis (202) of the movable element, the pusher (260) being carried by the board (100) and being stressed towards a zone of the movable element (200) equipped with serrations (270, 272) capable, in interaction with the head (264) of the pusher, of ensuring locking and indexing of the movable element (200) in the working position.

2. Switch according to claim 1, characterized in that the means stressing the movable element (200) elastically towards its position of rest comprise a dog (230) stressed by spring (232) carrying a roller (234) rolling on a curved cam (220).

3. Switch according to one of claims 1 or 2, characterized in that the movable element (200) is carried on the board (100) pivotably between a position of rest and two symmetrical working positions located respectively on either side of the position of rest.

4. Switch according to claims 1 to 3, taken in combination, characterized in that the zone of the movable element (200) towards which the head (264) of the pusher (260) is stressed carries two symmetrical serrations (270, 272) located respectively on either side of the position of the head of the pusher when the movable element is placed in the position of rest, and in that the curved cam (220), against which rests the roller (234) of the means stressing the movable element elastically in the position of rest, is concave in the direction of the pivot axis (202) of the movable element and approaches the latter symmetrically away from the bearing zone of the roller (234) when the movable element is in the position of rest.

5. Switch according to one of claims 1 to 4, characterized in that the zone of the movable element (200) towards which the head (264) of the pusher (260) is stressed carries two symmetric serrations (270, 272) separated from one another by a distance such that the head of the pusher can move freely between these serrations, in order to define two unstable positions of the movable element symmetrical relative to the position of rest.

6. Switch according to one of claims 1 to 5, characterized in that the movable element (200) is carried on the board (100) pivotably about a main axis (202), and in that the movable element (200) carries a handle (302) for pivoting about a secondary axis (310) perpendicular to the main axis (202).

7. Switch according to claim 6, characterized in that the movable element (200) is carried on the board (100) pivotably about the main axis (202) by means of a main journal (102), and in that the handle (300) is carried on the movable element (200) pivotably about the secondary axis (310) by means of a secondary journal (320) which penetrates into an annular groove (116) made on the main journal (102), in order to immobilize the movable element (200) in terms of translational motion on the main journal (202).

8. Switch according to one of claims 6 and 7, characterized in that it comprises a slide (410) mounted so as to be capable of translational motion on the supporting board (100) and controlled in its movement by the rotation of the handle (300) about the secondary axis (310), a keeper (420) carried by the slide (410) so as to follow the translational movements of the latter, and a rocker (450) mounted on the supporting board (100) pivotably between two positions and associated with a pair of driving cams (480, 482), such that the cams are placed alternately opposite the keeper (420), depending on the position of the rocker (450), and such that the successive pivoting drives of the handle (300) about the secondary axis (310) bring the keeper (420) alternately into engagement with one of the cams (480, 482) or the other, in order to move the rocker (450) alternately between these two positions.

9. Switch according to one of claims 6 to 8, characterized in that the handle (300) is stressed elastically towards a position of rest by a dog (340) stressed by spring (344) and carrying a roller (342).

10. Switch according to one of claims 1 to 9, characterized in that the contact stud (212) carried by the movable element (200) makes it possible to control the direction indicators of a motor vehicle.

# FIG -1

FIG-2

FIG-3

FIG-4

EP 0 250 303 B1